# EUROPEAN PATENT SPECIFICATION

(11) **EP 3 089 342 B1**
(45) Date of publication and mention of the grant of the patent: **20.10.2021**
(21) Application number: 16167222.5
(22) Date of filing: 27.04.2016
(51) Int. Cl.: H02M 3/07

(54) **INTRINSICALLY SAFE FIELD DEVICE COMPRISING A VOLTAGE CONVERSION CIRCUIT AND FEEDBACK CONTROL**
EIGENSICHERES FELDGERÄT MIT SPANNUNGSUMSETZUNGSSCHALTUNG UND RÜCKKOPPLUNGSREGELUNG
APPAREIL DE TERRAIN À SÉCURITÉ INTRINSÈQUE AVEC CIRCUIT DE CONVERSION DE TENSION ET COMMANDE A RETROACTION

(30) Priority: 28.04.2015 EP 15165382
(43) Date of publication of application: 02.11.2016
(73) Proprietor: Foxboro Eckardt Gmbh, 70806 Kornwestheim (DE)
(72) Inventor: Löchner, Michael, 70794 Filderstadt (DE)
(74) Representative: Friese Goeden Patentanwälte PartGmbB

(56) References cited:
- EP-A1- 1 202 427
- EP-A2- 1 014 531
- US-A1- 2009 322 384
- FIKRY M ET AL: "Average Behavioral Modeling Technique for Switched-Capacitor Voltage Converters", BEHAVIORAL MODELING AND SIMULATION WORKSHOP, PROCEEDINGS OF THE 2006 I EEE INTERNATIONAL, IEEE, PI, 14 September 2006 (2006-09-14), pages 109-114, XP032391938, DOI: 10.1109/BMAS.2006.283479 ISBN: 978-0-7803-9742-2

## Description

The invention relates to a field device comprising a voltage conversion circuit being adapted to regulate the respective voltages of at least a high voltage rail, a medium voltage rail and a low voltage rail, the voltage conversion circuit comprising a charge pump being adapted to transfer electric charge between the rails by periodically switching at least one capacitor. Further, the field device comprises an electronic control unit and at least one input which is adapted to receive an input current being indicative of a set point, wherein the input current is provided further to a voltage conversion circuit being adapted to provide a supply current and/or a supply voltage for said control unit. In addition, the field device comprises a feedback control having at least one analog output being coupled to an input of an I/P-converter, the feedback control comprising further at least one output being adapted to provide a health status signal and being coupled to a watch dog circuit. The different aspects of the invention cited above may be integrated into a positioner which may be adapted to control a linear or a rotary actuator.

From the US 6,064,582, a current converter for increasing current and decreasing voltage is known which may be used in a field device, such as a positioner, in order to provide an electrical power supply from the current indicating the set point. However, in the event of a malfunctioning this known circuit may emit sparks from electric discharges, so that a device comprising this known circuit constitutes a risk of explosion or fire in the presence of combustible gases and therefore, a device comprising this known circuit may not be qualified as an intrinsically safe device. To solve this problem, it is known in the art to surround this known circuit by a potting compound which increases costs and impairs any attempt to repair the circuit in the field.

Furthermore, it is known in the art to have a plurality of devices in place for redundantly providing the set point to the field device. Nevertheless, in case of a failover a short break may occur. This usually leads to a restart of the electronics inside the field device, so that the device under control may perform uncontrolled movements, thereby constituting a risk of damage for the machinery under control.

EP 1 202427 A1 and EP 1 014 531 A2 disclose a field device according to the preamble of claim 1. It is an object of the invention to provide a field device such as a positioner with an alternative design of the charge pump.

The object is solved by a field device according to claim 1. Preferred embodiments are disclosed in the dependent claims.

In one aspect of the invention, the invention relates to a voltage conversion circuit being adapted to regulate the respective voltages of at least a high voltage rail, a medium voltage rail and a low voltage rail. The voltage conversion circuit comprises a charge pump which is adapted to transfer electric charges between the rails by periodically switching at least one capacitor. If the voltage rails see a different load, an electrical current drains off the respective rail. This loss of electrical charges leads to a change in the potential difference between the rails. Electric charges can be transferred between the rails by charging and uncharging a capacitor, thereby transporting charges between the rails.

Known circuits of this type are using high capacity capacitors having at least 10 µF. These capacitors store a high amount of electrical energy which may lead to a spark when uncontrollably discharged.

According to the invention, much smaller capacitors are used. In some embodiments, the capacitor may have a capacity below 500 nF. In another embodiment, a single capacitor may have a value below 100 nF. In still another embodiment, a capacitor may have a capacity below 60 nF. Small capacitors of this type store a smaller amount of energy and thus do not constitute a source of uncontrolled sparks. At the same time, switching frequency may be increased in order to compensate for the smaller amount of electrical charges being transported in a single operating cycle. In some embodiments of the invention, the switching frequency may be higher than 100 kHz or higher than 200 kHz. Thus, the circuit according to the invention may be intrinsically safe and provide still the same output power.

In the embodiments of the invention, the voltage conversion circuit comprises at least one first capacitor having a first connector and a second connector and at least one second capacitor having a first connector and a second connector, the first connector of the first capacitor being coupled to the high voltage rail, the second connector of the first capacitor and the first connector of the second capacitor being coupled to the medium voltage rail and the second connector of the second capacitor being coupled to the low voltage rail. In this embodiment, the circuit comprises further at least one first switch having an input and an output, wherein the input of the first switch is coupled to the high voltage rail and the medium voltage rail via a first pair of balancing resistors and the circuit comprises further at least one second switch having an input and an output, wherein the input of the second switch is coupled the medium voltage rail and the low voltage rail via a second pair of balancing resistors, and wherein the output of the first switch is coupled to the output of the second switch by means of at least one seventh capacitor. It will be apparent to an expert in the field of the invention, that the basic concept described is scalable so that more than three voltage rails may be present, each voltage rail having a series connected capacitor, a pair of balancing resistors and a respective switch for charge transfer. For example, a plurality of intermediate voltages may be provided between the high voltage rail and the low voltage rail. As an example, the total potential difference between the high voltage rail and the medium voltage rail is equally divided by the at least one medium voltage rail.

As a further example, the low voltage rail may be a ground rail. In some embodiments of the invention, the high voltage rail may be connected to a supply voltage V_{CC}. In some embodiments of the invention, the first and second switches comprise any of a buffer circuit, a digital gate or a Schmitt-Trigger or at least one field effect transistor as a switching device. By selecting an appropriate switching device, the voltage conversion circuit may be optimized to provide high output power, high output voltage, or low power consumption to provide a high efficiency level.

In some embodiments of the invention the first and second switches each comprise a plurality of switching devices being arranged in parallel. In this case, also a plurality of third capacitors may be present to transfer charges between the different rails. This may increase output power of the voltage conversion circuit. In other embodiments, a plurality of switching devices may act on a single seventh capacitor. This will reduce the power-on resistance of the switching devices, therefore optimizing for low power loss and high efficiency of the voltage conversion circuit.

In some embodiments of the invention, the voltage conversion circuit may be adapted to operate bidirectional, so that charge is transferred from the high voltage rail to the lower voltage rails or vice versa, depending on the current provided or consumed on each voltage rail.

In some embodiments, a clock signal defining the switching frequency of the voltage conversion circuit is generated by means of an oscillator. In some embodiments of the invention, the oscillator may comprise any of a comparator or an operational amplifier or a microcontroller or a microprocessor. An oscillator comprising a comparator or an operational amplifier may be constructed such that power consumption of the oscillator is low. This will lead to a very efficient voltage conversion circuit being especially suitable for applications having limited supply current. If a microcontroller or a microprocessor is used as a clock generator, the clock signal may be provided by a device being already present in the circuit so that the footprint on a printed circuit board and/or the electrical power consumption of a dedicated oscillator may be saved.

In some embodiments of the invention, the invention relates to a field device comprising an electronic control unit and at least one input which is adapted to receive an input current being indicative of a set point. For example, the input current may vary between 4 mA and 20 mA to indicate a set point from 0 % to 100 %. The field device or parts of it requiring an electric energy supply may use the input current being indicative of the set point for electric energy supply of electronic circuits as well. In this case, it is preferred that the circuit is fully functional with an input current of less than 4 mA so that the control circuit is up and running even if the set point is selected at its lower end. If a known field device looses its set point value for a short period in time, the electric power supply of the electronic circuit is lost as well. When performing a restart, the field device may show an unexpected behavior causing trouble in the industrial process under control. According to the invention, the field device comprises electrical energy storage means being adapted to provide a supply current for said control unit in case of an interruption of the input current from the at least one input. In some embodiments of the invention, said electrical energy storage means may comprise any of at least one capacitor and/or at least one accumulator. The energy storage means may provide a supply current to the electronics of the field device, so that the restart can be avoided if the field device looses its set point for a short period in time.

In some embodiments of the invention, said electrical energy storage means are adapted to receive and store electrical energy when the input current exceeds a predefined threshold. This threshold may be selected such that a safe operation of the field device is possible and only excess current is stored by the energy storage means.

In some embodiments of the invention, said electrical energy storage means are adapted to receive and store electrical energy when the input current exceeds approximately 3 mA or approximately 3.3 mA. Thus, the electrical energy storage means may receive electrical energy if the set point is selected above its minimum value. An optional safety margin may be applied to this minimum value.

In some embodiments of the invention, the field device further comprises a switch being arranged in the power supply line between the voltage conversion circuit and the control unit, said switch being under control of supply current monitoring means being adapted to switch on the control unit before the energy storage means are fully loaded and/or being adapted to switch off the control unit if the energy storage means are unloaded below a threshold value. This embodiment may provide the further advantage of faster startup times as loading the storage means can be performed during normal operation. However, the device is fully up and working within a short period after startup because the switch can be closed when all supply voltages have reached their target values without the need to wait for the storage means to be fully loaded. The switch may comprise a field effect transistor having a feedback capacitor being connected between the drain electrode and the gate electrode. The feedback capacitor and the output impedance of the supply current monitoring means are forming an RC-element so that power is provided to the circuit with a ramp or time constant and hard switching is avoided.

In some embodiments of the invention, the field device comprises a voltage regulating means being adapted to control the voltage of the power supply line between the voltage conversion circuit and the control unit. The device comprises further a discharge controller being adapted to control the discharge current of the electrical energy storage means. An output signal of the voltage regulating means is provided as an input signal to the discharge controller. This setup constitutes an easy way to control charging and discharging of the energy storage means as a voltage drop on the supply line which cannot be compensated for will lead to an overdrive signal from the voltage regulating means which can be detected by the discharge controller.

In some embodiments, the invention relates to a field device comprising an electronic control unit and at least one input which is adapted to receive an input current being indicative of a set point, wherein said input current is provided further to a voltage conversion circuit being adapted to provide a supply current and/or a supply voltage for said control unit. As an example, the voltage conversion circuit is adapted to regulate the respective voltages of at least a high voltage rail, a medium voltage rail, and a low voltage rail, said voltage conversion circuit comprising a charge pump being adapted to transfer electric charge between the rails by periodically switching at least one capacitor having a value below 500 nF or below 100 nF or below 60 nF with a switching frequency exceeding 100 kHz or 200 kHz, wherein said field device comprises further electrical energy storage means being adapted to provide a supply current for said control unit in case of an interruption of the input current from the at least one input and wherein said electrical energy storage means are adapted to receive and store electrical energy when the input current exceeds a predefined threshold.

In some embodiments of the invention, a digital feedback control is present. The digital feedback control may comprise a microprocessor or microcontroller and software implementing a PI, a PD, or a PID control. The feedback control has at least one analog output which may be coupled to an input of an I/P-converter. Coupling of the feedback controller and the I/P-converter may include a power amplifier such as at least one bipolar transistor and/or at least one field effect transistor and/or a line driver. The I/P-converter will provide an air pressure from a supply line which is fed to a pneumatic actuator such as an actuating cylinder. The digital feedback control of the invention comprises further at least one output being adapted to provide a health status signal. This health status signal is coupled to a watch dog circuit. The watch dog circuit will keep silent during normal operation of the feedback control. If an error of the feedback control is detected, the watch dog circuit will output a control signal for a protection switch. The protection switch is adapted to short-circuit the analog output to ground. The I/P-converter will get a zero input signal from the ground line and the pneumatic actuator moves into a safety position. In some embodiments of the invention, the health status signal is a clock signal. The watch dog circuit is adapted to determine the frequency and/or the amplitude of said clock signal. If the clock signal comes out of range, a malfunction of the microprocessor or microcontroller of the feedback control is assumed and the watch dog emits a signal to the protection switch for switching off the control signal of the I/P-converter.

In some embodiments of the invention, the protection switch comprises a field effect transistor. This embodiment has the advantage that the watch dog circuit sees only a small capacitive load and the source-drain-resistance is considerable low when the protection switch is operated, so that the voltage at the I/P-converter drops to a quite low value.

Details of the invention may further elucidated from the following explanation of working examples and exemplary embodiments, some of which are shown in the appended drawings, wherein
- Fig. 1: illustrates an embodiment of a voltage conversion circuit.
- Fig. 2: illustrates an embodiment of an oscillator.
- Fig. 3: illustrates the wiring diagram of an embodiment of a field device.
- Fig. 4: illustrates an embodiment of a switching device.
- Fig. 5: illustrates an exemplary use of a positioner.
- Fig. 6: illustrates an exemplary embodiment of a watch dog circuit.

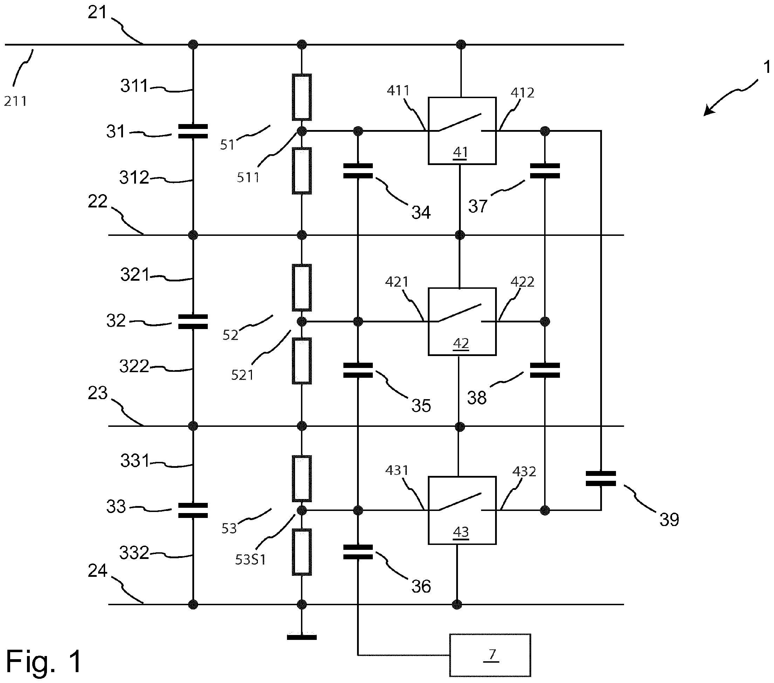

Fig. 1 illustrates a voltage conversion circuit being adapted to regulate the respective voltages of at least a high voltage rail 21, a medium voltage rail 22 and a low voltage rail 23. The voltage conversion circuit can be extended by adding an identical circuit. Thus, Fig. 1 shows a fourth voltage rail 24 which has a lower electrical potential than the low voltage rail 23. In the embodiment shown, the fourth voltage rail 24 is a ground rail. The circuit may be periodically extended to have any number of voltage rails. In some embodiments, the number of voltage rails may amount between 3 and 10.

The voltage conversion circuit 1 comprises a plurality of capacitors 31, 32 and 33 which are series connected to each other. The first connector 311 from the first capacitor 31 is connected to the high voltage rail 21. The second connector 312 of the first capacitor 31 and the first connector 321 of the second capacitor 32 are connected to a medium voltage rail. The second connector 322 of the second capacitor 32 and the first connector 321 of the third capacitor 33 are connected to a low voltage rail 23. The second connector 332 of the third capacitor 33 is connected to the ground rail 24. When operating, the circuit 1 according to Fig. 1 operates as a charge pump and divides the voltage between the high voltage rail 21 and the ground rail 24 so that the electrical potentials of the medium voltage rail 22 and the low voltage rail 23 are spaced equally apart. As an example, in case that the high voltage rail 21 features 12 V and the ground rail 24 features 0 V, the medium voltage rail 22 will have an electrical potential of 8 V and the low voltage rate 23 will have an electrical potential of 4 V. In another example, the high voltage rail 21 may have 9 V and the ground rail 24 may have 0 V. In this case, the medium voltage rail 22 will have an electrical potential of 6 V and the low voltage rate 23 will have an electrical potential of 3 V. Other electrical potentials, depending on the voltages applied and the number of electrical potentials will easily become apparent from this explanation.

In some embodiments, the voltage conversion circuit 1 may be adapted to operate bidirectional in at least one operating status, so that current or charge delivered to the low voltage rail 23 may flow to the high voltage rail 21.

In parallel to the capacitors 31, 32 and 33, a pair of balancing resistors 51, 52 and 53 is provided. The balancing resistors are selected to have identical values each in order to provide at their interconnecting points 511, 521 and 523 an electrical potential being spaced apart in the same amount from the respective higher and lower potential rail. By way of example, in case that the high voltage rail 21 features 9 V and the medium voltage rail 22 features 6 V, the interconnecting point 511 of the first pair 51 of balancing resistors will have an electrical potential of 7.5 V.

To each pair of balancing resistors 51, 52, and 53, a respective switch 41, 42 and 43 is connected. Each switch 41, 42 and 43 has an input 411, 421 and 431 which is adapted to receive a clock signal generated by an oscillator 7. Coupling capacitors 34, 35 and 36 are provided in the clock line for DC suppression.

The outputs 412, 422 and 432 of the switches 41, 42 and 43 are coupled by capacitors 37, 38 and 39. As each output is capacitively coupled to any other output, charge may be transferred between each of the four rails 21, 22, 23 and 24.

The switches 41, 42 and 43 may be selected from any of a digital gate, a buffer, a Schmitt-Trigger or a transistor. In order to reduce power-on resistance, a plurality of switching devices in parallel may be used for each of the switches shown.

The clock signal generated by oscillator 7 may be higher than 100 kHz, higher than 200 kHz or higher than 500 kHz. This feature has the effect, that the capacitance of the capacitors 31, 32, 33, 34, 35, 36, 37, 38 and 39 may be reduced to a value below 500 nF, below 100 nF or below 16 nF. As the small capacitors are storing only a small amount of energy, the risk of electric discharges is dramatically reduced and the device may be used in explosive sensitive areas without the need of applying an additional potting compound.

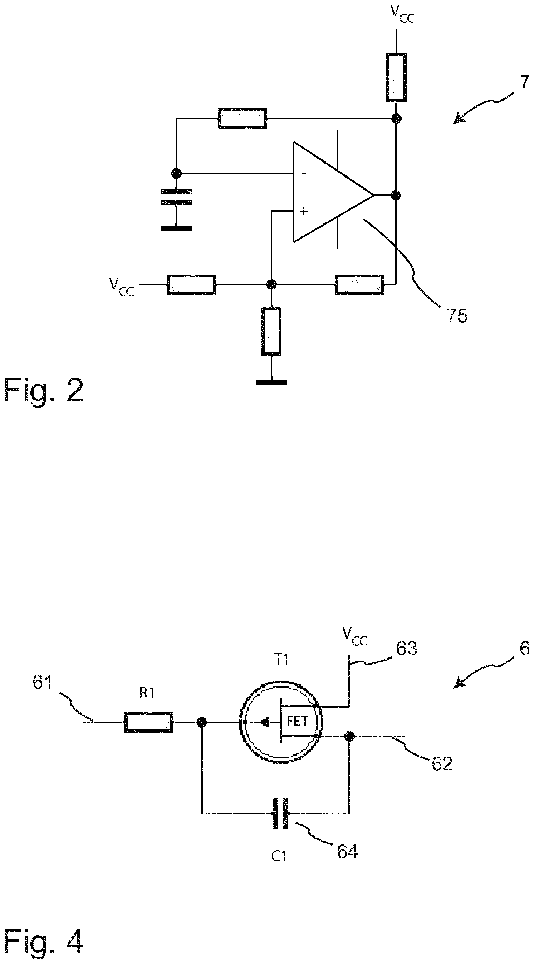

The oscillator 7 may be selected from any known type. However, in some embodiments of the invention, the oscillator described with respect to Fig. 2 may be used. The oscillator uses a comparator or an operational amplifier 75. The oscillator 7 may have the advantage of low power consumption so that overall power requirement of the field device is reduced.

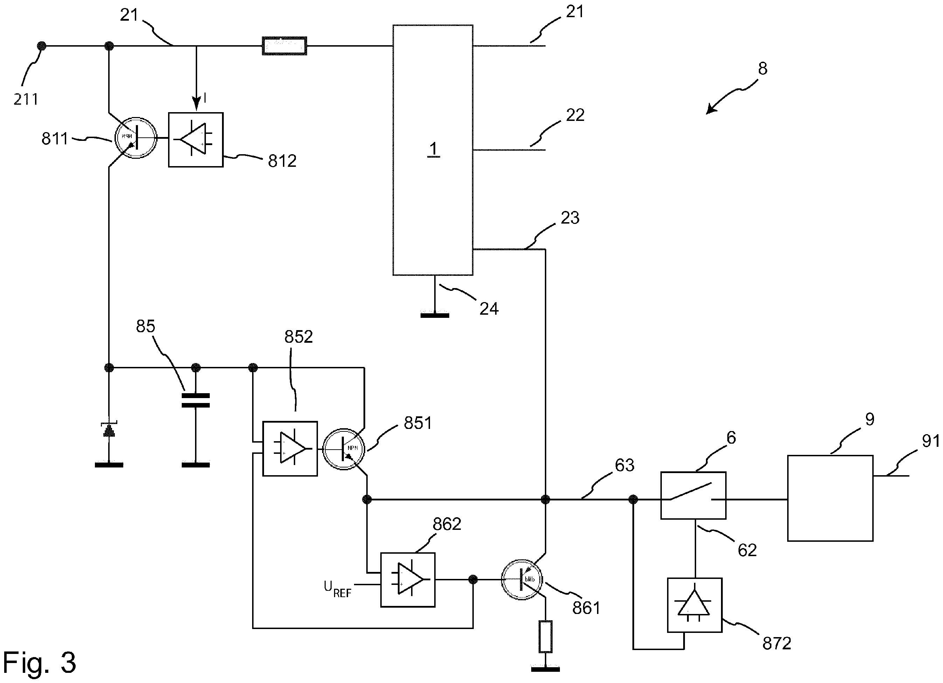

With reference to Fig. 3 a wiring diagram of a field device 8 is illustrated. The field device 8 comprises a microprocessor or a microcontroller 9 which implements a feedback control by means of a software. The feedback control is used to control an actuator. The actuator may be selected from a linear or a rotary actuator. The actuator may comprise pneumatic or electric drive means.

The microprocessor 9 comprises a supply line being adapted to receive a supply current. The supply current is controlled by a switch 6. The switch 6 is under control of supply current monitoring means 872 being adapted to switch on the microprocessor 9 if the supply line 63 has reached its target voltage after startup of the field device. Power is provided to the supply line 63 by means of a voltage conversion circuit 1 such as exemplarily described above with respect to Fig. 1.

The circuit comprises further voltage regulating means 862 which compare the voltage of the supply line 63 with a voltage reference U_{ref}. A voltage regulating switch 861 is controlled by the voltage regulating means 862. In the example shown, the voltage regulating switch 861 comprises a bipolar transistor. Nevertheless, a plurality of transistors and/or at least one field effect transistor is suitable as well. The voltage regulating switch 861 controls a current flowing from the supply line 63 to ground such that the supply line voltage thus neither exceed nor falls below the target value.

The circuit 8 comprises further an input 211 which is adapted to receive an input current. The input current is used to supply the circuit 8 with electrical energy. Furthermore, the input current is indicative of a set point. As an example, the input current may range between 4 mA and 20 mA to indicate a value between 0 % and 100 % of the full stroke of the actuator. In other embodiments, a current or voltage signal may be superimposed to the supply current in order to digitally transfer a set point value, e.g. by a known HART communication or similar protocols.

As the circuit 8 must be fully functional even if the set point is selected to a low value, the whole circuit may be designed such that a current of less than 4 mA or less than 3.5 mA or less than 3.3 mA or less than 3.0 mA is sufficient for operation. If a higher set point is selected and therefore, a higher current is available to the circuit 8, this current is detected by charge regulating means 812. A respective charge regulating switch 811 is controlled by the charge regulating means 812 in order to dump excess current to ground.

Before excess current is dumped to a ground connection not shown, it is used to charge energy storage means 85. The energy storage means 85 may comprise any of a capacitor or an accumulator. The capacitor may be selected to be in the range of more than 100 µF, more than 400 µF, or more than 1000 µF. An optional Zener diode may be used for ensuring or improving intrinsic safety.

Depending on the size of the energy storage means 85, it may take some time after power on until the energy storage means 85 are fully loaded. To avoid power up delay time, the microprocessor 9 may be switched on by switch 6 after the voltage conversion circuit 1 has been powered up, even if the storage means 85 are not yet fully loaded.

Charge state of the energy storage means 85 is detected by the discharge controller 852. The discharge controller controls the switch 851, such as a bipolar transistor or a FET to control the discharge current from the storage means 85 to the supply line 63. Such a discharge current is provided if the charge state of the storage means is sufficiently high and the voltage regulating means 862 indicate that a voltage drop occurs that cannot be compensated by reducing the current flowing through switch 861 to ground.

In some embodiments, the voltage conversion circuit 1 may be adapted to operate bidirectional in at least one operating status, so that current delivered from the storage means 85 may flow from the low voltage rail 23 to the high voltage rail 21. In such an operational state, the switch 851 may allow charge flowing from the storage means 85 to the rail 23 and the voltage regulating switch 861 is at least partially blocked so that this current is not completely dumped to ground.

The sophistic circuit shown in Fig. 3 avoids a restart of the electronics in the field device when the input signal at the input 211 is interrupted for a short period, as the supply voltage can be buffered by the energy storage means 85. On the other hand, charging the energy storage means 85 with excess current only avoids slowing down the response time due to a large capacitance input 211.

The switch 6 is explained in greater detail looking at Fig. 4. As can be seen from Fig. 4, the switch 6 comprises basically a field effect transistor as switching device. The power supply line 63 is connected to a source contact of the FET. The drain contact 62 is coupled to the microprocessor 9. A control signal of the supply current monitoring means 872 is supplied to the gate electrode by means of line 61.

The field effect transistor comprises a feedback capacitor 64 being connected between the drain electrode and the gate electrode. This results in an RC element limiting the slew rate of the gate voltage. Therefore, switching speed of the switch is reduced and a soft start of the microprocessor 9 may be achieved.

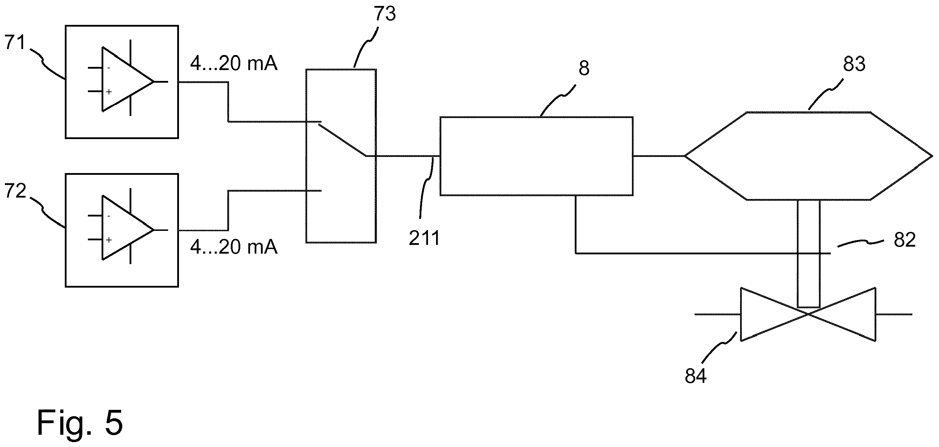

Fig. 5 illustrates the use of the field device 8 according to the invention. The field device 8 may be part of a positioner. The positioner controls a pneumatic actuator 83. The actuator 83 controls a piece of equipment inside the plant. As an example, a valve 84 is shown which is under control of the pneumatic actuator 83. The position of the pneumatic actuator 83 is sensed by a sensing device 82. As an example, a resistive position indicator may be provided as a sensing device 82.

The actual value from the sensing device 82 is compared with a set point supplied to the positioner 8. The actuator 83 is moved if a discrepancy between the actual value and the set point is detected.

The set point is provided as a current value which may be selected between 4 mA and 20 mA to indicate a position between 0 % and 100 % of a full stroke. In order to increase security and/or to allow a failover, two high level devices 71 and 72 are provided to supply the respective set point to the positioner 8. A switching device 73 is operated in case of a failure of the first high level device 71. This will lead to a short interruption of the current signal being supplied to the positioner 8. After switching has been completed, the second high level device 72 will deliver the set point and the supply current to the positioner 8.

During switching, a short drop of the supply current may occur. Known positioners will switch off under these circumstances. After restart, the actuator 83 may move uncontrollable which may affect the flow through the valve 84 and negatively affect a plant or production site comprising this valve. The positioner 8 including the circuit described in detail with respect to Fig. 3 will avoid such a break as the energy storage means 85 can compensate a short loss of supply current at the input 211. Therefore, the circuit according to the invention may increase security.

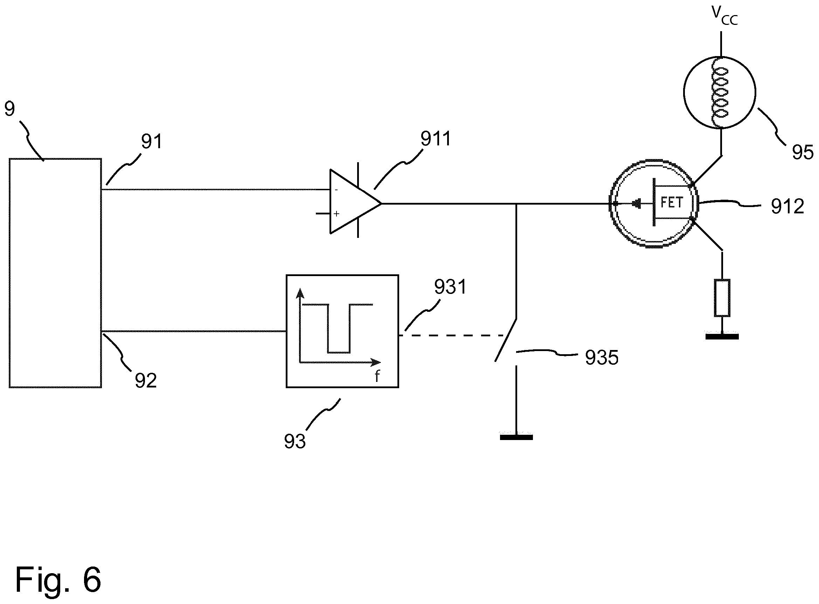

Fig. 6 illustrates a microcontroller 9 having an analog output 91. The analog output 91 generates an analog output signal which is used to control an I/P-converter 95. The control signal may be supplied to the I/P-converter 95 directly or by means of an optional amplifier 911 and/or an optional power transistor 912. In some embodiments, the power transistor may comprise a field effect transistor to reduce the power needed to control the I/P-converter.

The I/P-converter 95 controls the pressure delivered to the pneumatic actuator 83 explained in greater detail above.

If the microprocessor 9 comes out of control, uncontrollable motion of the pneumatic actuator 83 should be avoided. Therefore, the microprocessor has a second output 92 carrying a signal being indicative of the health status of the microprocessor 9. The second output 92 carries a clock signal which is usually within a certain range if the microprocessor 9 is up and running.

A watch dog circuit 93 is adapted to receive the health status signal from the output 92. The watch dog circuit 93 evaluates this health status signal and controls a switch 935 which is adapted to short circuit the output signal 91. If the switch 935 is closed, the switch 912 gets a ground potential on his gate electrode and the I/P-converter 95 may bring the pneumatic actuator 83 into a safe position.

In some embodiments of the invention, the watch dog circuit 93 evaluates the amplitude and/or the frequency of the clock signal from the microprocessor 9. The output 931 of the watch dog circuit 93 will operate the switch 935 if the frequency and/or the amplitude of the health status signal is out of range.

Obviously, readily discernable modifications and variations of the present invention are possible in the light of the above teachings. It is therefore to be understood that within the scope of the appended claims, the invention may be practice otherwise then as specifically described herein. For example, while describing the invention in terms of discrete components interactively cooperating, it is contemplated that the system described herein may be practiced entirely in software or by means of integrated circuits or an application specific integrated circuit (ASIC). Software may be embodied in a carrier such as a magnetic or an optical disc, an EEPROM, or a radio frequency carrier wave.

If the above description recites "first" and "second" features, this wording is selected to differentiate between elements of equal kind without giving a ranking or a preference.

## Claims

1. Field device (8) comprising a voltage conversion circuit (1) being adapted to regulate the respective voltages of at least a high voltage rail (21), a medium voltage rail (22), and a low voltage rail (23), said voltage conversion circuit (1) comprising a charge pump being adapted to transfer electric charge between the rails (21, 22, 23, 24) by periodically switching at least one capacitor (37, 38, 39),
**characterized in that**
the voltage conversion circuit is adapted to transfer electric charge at a switching frequency of more than 100 kHz or more than 200 kHz and said capacitors (31, 32, 33, 34, 37, 38, 39) each have a value below 500 nF or below 100 nF or below 60 nF, wherein the field device further comprises at least one first capacitor (31) having a first connector (311) and a second connector (312) and
at least one second capacitor (32) having a first connector (321) and a second connector (322),
the first connector (311) of the first capacitor (31) being coupled to the high voltage rail (21), the second connector (312) of the first capacitor (31) and the first connector (321) of the second capacitor (32) being coupled to the medium voltage rail (22) and the second connector (322) of the second capacitor (32) being coupled to the low voltage rail (23),
said circuit (1) comprising further at least one first switch (41) having an input (411) and an output (412), wherein the input (411) of the first switch (41) is coupled to the high voltage rail (21) and the medium voltage rail (22) via a first pair of balancing resistors (51),
said circuit (1) comprising further at least one second switch (42) having an input (421) and an output (422), wherein the input (421) of the second switch (42) is coupled to the medium voltage rail (22) and the low voltage rail (23) via a second pair of balancing resistors (52), and
wherein the output (412) of the first switch (41) is coupled to the output (422) of the second switch (42) by means of at least one seventh capacitor (37).

2. Field device according to claim 1, wherein the first and second switches (41, 42, 43) comprise any of a buffer or a digital gate or a Schmitt-Trigger or a FET as a switching device.

3. Field device according to any of the claims 1 to 2, wherein the first and second switches (41, 42, 43) each comprise a plurality of switching devices being arranged in parallel.

4. Field device according to any of claims 1 to 3, wherein a clock signal defining the switching frequency is generated by an oscillator (7) comprising any of a comparator (75) or an operational amplifier or a microcontroller or a microprocessor.

5. Field device (8) according to any of the preceding claims, further comprising an electronic control unit (9) and at least one input (211) which is adapted to receive an input current being indicative of a set point, wherein said input current is provided further to said voltage conversion circuit (1) being adapted to provide a supply current and/or a supply voltage for said control unit (9), wherein said field device comprises further electrical energy storage means (85) being adapted to provide a supply current for said control unit (9) in case of an interruption of the input current from the at least one input (211) and wherein said electrical energy storage means (85) are adapted to receive and store electrical energy when the input current exceeds a predefined threshold.

6. Field device according to claim 5, wherein said electrical energy storage means (85) comprise any of at least one capacitor and/or at least one accumulator.

7. Field device according to any of claims 5 or 6, wherein said predefined threshold is selected to be higher than 3.0 mA or higher than 3.3 mA.

8. Field device according to any of claims 5 to 7, comprising further a switch (6) being arranged in a power supply line (63) between the voltage conversion circuit (1) and the control unit (9), said switch (6) being under control of supply current monitoring means (872) being adapted to switch on the control unit (9) before the energy storage means (85) are fully loaded and/or being adapted to switch off the control unit (9) if the energy storage means (85) are unloaded below a threshold value.

9. Field device according to claim 8, wherein said switch (6) comprises a FET having a feedback capacitor (64) being connected between the drain electrode and the gate electrode.

10. Field device according to any of claims 5 to 9, comprising further voltage regulating means (862, 861) being adapted to control the voltage of the power supply line (63) between the voltage conversion circuit (1) and the control unit (9), and
comprising further a discharge controller (852, 851) being adapted to control a discharge current of the electrical energy storage means (85), wherein
an output signal of the voltage regulating means (862) is provided as an input signal to the discharge controller (852).

11. Field device (8) according to any of the preceding claims, further comprising a digital feedback control having at least one analog output (92) being coupled to an input of a current to pressure converter (95), the digital feedback control comprising further at least one output (92) being adapted to provide a health status signal and being coupled to a watchdog circuit (93),
wherein
the digital feedback control comprises further a protection switch (935) being adapted to short-circuit the analog output (91) to ground and wherein
the watchdog circuit (93) is adapted to control said protection switch (935).

12. Field device according to claim 11, wherein the health status signal is a clock signal and the watchdog circuit (93) is adapted to determine the frequency of said clock signal.

13. Field device according to claim 11 or 12, wherein the health status signal is a clock signal and the watchdog circuit (93) is adapted to determine the amplitude of said clock signal.

14. Field device according to any of claims 11 to 12,
wherein the protection switch (935) comprises a FET.

15. Positioner (83) comprising a field device according to any of claims 1 to 14.

## Patentansprüche

1. Feldvorrichtung (8) umfassend eine Spannungsumsetzungsschaltung (1), die so ausgelegt ist, dass sie die jeweiligen Spannungen mindestens einer Hochspannungsschiene (21), einer Mittelspannungsschiene (22) und einer Niederspannungsschiene (23) regelt, wobei die Spannungsumsetzungsschaltung (1) eine Ladungspumpe umfasst, die so ausgelegt ist, dass sie elektrische Ladung zwischen den Schienen (21, 22, 23, 24) durch periodisches Schalten mindestens eines Kondensators (37, 38, 39) überträgt,
**dadurch gekennzeichnet, dass**
die Spannungsumsetzungsschaltung so ausgelegt ist, dass sie elektrische Ladung mit einer Schaltfrequenz von mehr als 100 kHz oder mehr als 200 kHz überträgt, und die Kondensatoren (31, 32, 33, 34, 37, 38, 39) jeweils einen Wert weniger als 500 nF oder weniger als 100 nF oder weniger als 60 nF haben, wobei die Feldvorrichtung weiter mindestens einen ersten Kondensator (31) mit einem ersten Anschluss (311) und einem zweiten Anschluss (312) und mindestens einen zweiten Kondensator (32) mit einem ersten Anschluss (321) und einem zweiten Anschluss (322) umfasst, wobei der erste Anschluss (311) des ersten Kondensators (31) mit der Hochspannungsschiene (21) gekoppelt ist, der zweite Anschluss (312) des ersten Kondensators (31) und der erste Anschluss (321) des zweiten Kondensators (32) mit der Mittelspannungsschiene (22) gekoppelt sind und der zweite Anschluss (322) des zweiten Kondensators (32) mit der Niederspannungsschiene (23) gekoppelt ist,
wobei die Schaltung (1) weiter mindestens einen ersten Schalter (41) mit einem Eingang (411) und einem Ausgang (412) umfasst, wobei der Eingang (411) des ersten Schalters (41) über ein erstes Paar von Abgleichwiderständen (51) mit der Hochspannungsschiene (21) und der Mittelspannungsschiene (22) gekoppelt ist,
wobei die Schaltung (1) weiter mindestens einen zweiten Schalter (42) mit einem Eingang (421) und einem Ausgang (422) umfasst,
wobei der Eingang (421) des zweiten Schalters (42) über ein zweites Paar von Abgleichwiderständen (52) mit der Mittelspannungsschiene (22) und der Niederspannungsschiene (23) gekoppelt ist, und
wobei der Ausgang (412) des ersten Schalters (41) mit dem Ausgang (422) des zweiten Schalters (42) über mindestens einen siebten Kondensator (37) gekoppelt ist.

2. Feldvorrichtung nach Anspruch 1, wobei der erste und der zweite Schalter (41, 42, 43) entweder einen Puffer oder ein digitales Gate oder einen Schmitt-Trigger oder einen FET als Schaltvorrichtung umfassen.

3. Feldvorrichtung nach einem der Ansprüche 1 bis 2, wobei der erste und zweite Schalter (41, 42, 43) jeweils eine Mehrzahl von parallel angeordneten Schaltvorrichtungen umfassen.

4. Feldvorrichtung nach einem der Ansprüche 1 bis 3, wobei ein die Schaltfrequenz definierendes Taktsignal von einem Oszillator (7) erzeugt wird, der entweder einen Komparator (75) oder einen Operationsverstärker oder einen Mikrocontroller oder einen Mikroprozessor umfasst.

5. Feldvorrichtung (8) nach einem der vorhergehenden Ansprüche, weiter umfassend eine elektronische Steuer- oder Regeleinheit (9) und mindestens einen Eingang (211), der so ausgelegt ist, dass er einen Eingangsstrom empfängt, der einen Sollwert anzeigt, wobei der Eingangsstrom weiter der Spannungsumsetzungsschaltung (1) zugeführt wird, die so ausgelegt ist, dass sie einen Versorgungsstrom und/oder eine Versorgungsspannung für die Regeleinheit (9) bereitstellt, wobei die Feldvorrichtung weiter elektrische Energiespeichermittel (85) umfasst, die so ausgelegt sind, dass sie einen Versorgungsstrom für die Regeleinheit (9) im Falle einer Unterbrechung des Eingangsstroms von dem mindestens einen Eingang (211) bereitstellt, und wobei die elektrischen Energiespeichermittel (85) so ausgelegt sind, dass sie elektrische Energie empfangen und speichern, wenn der Eingangsstrom einen vorbestimmten Schwellenwert überschreitet.

6. Feldvorrichtung nach Anspruch 5, wobei die elektrischen Energiespeichermittel (85) entweder mindestens einen Kondensator und/oder mindestens einen Akkumulator umfassen.

7. Feldvorrichtung nach einem der Ansprüche 5 oder 6, wobei der vorbestimmte Schwellenwert so gewählt ist, dass er höher als 3,0 mA oder höher als 3,3 mA ist.

8. Feldvorrichtung nach einem der Ansprüche 5 bis 7,
weiter umfassend einen Schalter (6), der in einer Stromversorgungsleitung (63) zwischen der Spannungsumsetzungsschaltung (1) und der Regeleinheit (9) angeordnet ist, wobei der Schalter (6) unter der Kontrolle von Versorgungsstrom-Überwachungsmitteln (872) steht, die so ausgelegt sind, dass sie die Regeleinheit (9) einschalten, bevor die Energiespeichermittel (85) vollständig geladen sind, und/oder so ausgelegt sind, dass sie die Regeleinheit (9) ausschalten, wenn die Energiespeichermittel (85) unter einen Schwellenwert entladen werden.

9. Feldvorrichtung nach Anspruch 8, wobei der Schalter (6) einen FET mit einem Rückkopplungskondensator (64) umfasst, der zwischen der Drain-Elektrode und der Gate-Elektrode angeschlossen ist.

10. Feldvorrichtung nach einem der Ansprüche 5 bis 9, weiter umfassend Spannungsregelungsmittel (862, 861), die so ausgelegt sind, dass sie die Spannung der Stromversorgungsleitung (63) zwischen der Spannungsumsetzungsschaltung (1) und der Regeleinheit (9) regeln können, und
weiter umfassend einen Entladungsregler (852, 851), der so ausgelegt ist, dass er einen Entladungsstrom der elektrischen Energiespeichermittel (85) regelt, wobei
ein Ausgangssignal der Spannungsregelungsmittel (862) als Eingangssignal für den Entladungsregler (852) bereitgestellt wird.

11. Feldvorrichtung (8) nach einem der vorhergehenden Ansprüche, weiter umfassend eine digitale Rückkopplungsregelung, die mindestens einen analogen Ausgang (92) aufweist, der mit einem Eingang eines Strom-Druck-Wandlers (95) gekoppelt ist, wobei die digitale Rückkopplungsregelung weiter mindestens einen Ausgang (92) umfasst, der so ausgelegt ist, dass er ein Gesundheitszustandssignal bereitstellt, und der mit einer Watchdog-Schaltung (93) gekoppelt ist
wobei
die digitale Rückkopplungsregelung weiter einen Schutzschalter (935) umfasst, der so ausgelegt ist, dass er den analogen Ausgang (91) nach Masse kurzschließt, und wobei
die Watchdog-Schaltung (93) so ausgelegt ist, dass sie den Schutzschalter (935) regelt.

12. Feldvorrichtung nach Anspruch 11, wobei das Gesundheitszustandssignal ein Taktsignal ist und die Watchdog-Schaltung (93) so ausgelegt ist, dass sie die Frequenz des Taktsignals bestimmt.

13. Feldvorrichtung nach Anspruch 11 oder 12, wobei das Gesundheitszustandssignal ein Taktsignal ist und die Watchdog-Schaltung (93) so ausgelegt ist, dass sie die Amplitude des Taktsignals bestimmt.

14. Feldvorrichtung nach einem der Ansprüche 11 bis 12, wobei der Schutzschalter (935) einen FET umfasst.

15. Stellungsregler (83) umfassend eine Feldvorrichtung nach einem der Ansprüche 1 bis 14.

## Revendications

1. Dispositif de terrain (8) comprenant un circuit (1) de conversion de tension qui est adapté pour réguler les tensions respectives d'au moins un rail à haute tension (21), un rail à moyenne tension (22) et un rail à basse tension (23), ledit circuit (1) de conversion de tension comprenant une pompe de charge qui est adaptée pour transférer une charge électrique entre les rails (21, 22, 23, 24) en commutant périodiquement au moins un condensateur (37, 38, 39),
**caractérisé en ce que**
le circuit de conversion de tension est adapté pour transférer une charge électrique à une fréquence de commutation de plus de 100 kHz ou de plus de 200 kHz, et lesdits condensateurs (31, 32, 33, 34, 37, 38, 39) ont chacun une valeur en dessous de 500 nF ou en dessous de 100 nF ou en dessous de 60 nF, dans lequel le dispositif de terrain comprend en outre au moins un premier condensateur (31) ayant un premier connecteur (311) et un second connecteur (312), et au moins un second condensateur (32) ayant un premier connecteur (321) et un second connecteur (322), le premier connecteur (311) du premier condensateur (31) étant couplé au rail à haute tension (21), le second connecteur (312) du premier condensateur (31) et le premier connecteur (321) du second condensateur (32) étant couplés au rail à moyenne tension (22) et le second connecteur (322) du second condensateur (32) étant couplé au rail à basse tension (23),
ledit circuit (1) comprenant en outre au moins un premier commutateur (41) qui a une entrée (411) et une sortie (412),
dans lequel l'entrée (411) du premier commutateur (41) est couplée au rail à haute tension (21) et au rail à moyenne tension (22) via une première paire de résistances d'équilibrage (51),
ledit circuit (1) comprenant en outre au moins un second commutateur (42) qui a une entrée (421) et une sortie (422),
dans lequel l'entrée (421) du second commutateur (42) est couplée au rail à moyenne tension (22) et au rail à basse tension (23) via une seconde paire de résistances d'équilibrage (52), et
dans lequel la sortie (412) du premier commutateur (41) est couplée à la sortie (422) du second commutateur (42) au moyen d'au moins un septième condensateur (37).

2. Dispositif de terrain selon la revendication 1, dans lequel le premier et le second commutateur (41, 42, 43) comprennent un élément quelconque parmi un tampon ou une porte numérique ou une bascule de Schmitt ou un transistor à effet de champ (FET) comme dispositif de commutation.

3. Dispositif de terrain selon l'une quelconque des revendications 1 à 2, dans lequel le premier et le second commutateur (41, 42, 43) comprennent chacun une pluralité de dispositifs de commutation étant agencés en parallèle.

4. Dispositif de terrain selon l'une quelconque des revendications 1 à 3, dans lequel un signal d'horloge définissant la fréquence de commutation est généré par un oscillateur (7) comprenant un élément quelconque parmi un comparateur (75) ou un amplificateur opérationnel ou un microcontrôleur ou un microprocesseur.

5. Dispositif de terrain (8) selon l'une quelconque des revendications précédentes, comprenant en outre une unité de commande électronique (9) et au moins une entrée (211) qui est adaptée pour recevoir un courant d'entrée étant indicatif d'un point de consigne, dans lequel ledit courant d'entrée est fourni en outre audit circuit (1) de conversion de tension qui est adapté pour fournir un courant d'alimentation et/ou une tension d'alimentation pour ladite unité de commande (9), dans lequel ledit dispositif de terrain comprend en outre un moyen de stockage d'énergie électrique (85) qui est adapté pour fournir un courant d'alimentation pour ladite unité de commande (9) en cas d'interruption du courant d'entrée provenant de ladite au moins une entrée (211) et dans lequel ledit moyen de stockage d'énergie électrique (85) est adapté pour recevoir et stocker de l'énergie électrique quand le courant d'entrée excède un seuil prédéfini.

6. Dispositif de terrain selon la revendication 5, dans lequel ledit moyen de stockage d'énergie électrique (85) comprend un élément quelconque parmi au moins un condensateur et/ou au moins un accumulateur.

7. Dispositif de terrain selon l'une quelconque des revendications 5 ou 6, dans lequel ledit seuil prédéfini est sélectionné pour être plus élevé que 3,0 mA ou plus élevé que 3,3 mA.

8. Dispositif de terrain selon l'une quelconque des revendications 5 à 7, comprenant en outre un commutateur (6) qui est agencé dans une ligne d'alimentation de puissance (63) entre le circuit (1) de conversion de tension et l'unité de commande (9), ledit commutateur (6) étant sous la commande d'un moyen de surveillance de courant d'alimentation (872) qui est adapté pour activer l'unité de commande (9) avant que le moyen de stockage énergie (85) soit complètement chargé et/ou qui est adapté pour désactiver l'unité de commande (9) si le moyen de stockage d'énergie (85) est déchargé en dessous d'une valeur seuil.

9. Dispositif de terrain selon la revendication 8, dans lequel ledit commutateur (6) comprend un FET ayant un condensateur de rétroaction (64) qui est connecté entre l'électrode de drain et l'électrode de grille.

10. Dispositif de terrain selon l'une quelconque des revendications 5 à 9, comprenant en outre un moyen de régulation de tension (862, 861) qui est adapté pour commander la tension de la ligne d'alimentation de puissance (63) entre le circuit (1) de conversion de tension et l'unité de commande (9), et
un signal de sortie du moyen de régulation de tension (862) est fourni à titre de signal d'entrée au contrôleur de décharge (852).

11. Dispositif de terrain (8) selon l'une quelconque des revendications précédentes, comprenant en outre une commande de rétroaction numérique ayant au moins une sortie analogique (92) qui est couplée à une entrée d'un convertisseur (95) de courant en pression, la commande de rétroaction numérique comprenant en outre au moins une sortie (92) qui est adaptée pour fournir un signal de statut de santé et qui est couplée à un circuit chien de garde (93),
dans lequel
la commande de rétroaction numérique comprend en outre un commutateur de protection (935) qui est adapté pour court-circuiter la sortie analogique (91) pour une mise à la terre et dans lequel le circuit chien de garde (93) est adapté pour commander ledit commutateur de protection (935).

12. Dispositif de terrain la revendication 11, dans lequel le signal de statut de santé est un signal d'horloge et le circuit chien de garde (93) est adapté pour déterminer la fréquence dudit signal d'horloge.

13. Dispositif de terrain selon la revendication 11 ou 12, dans lequel le signal de statut de santé est un signal d'horloge et le circuit chien de garde (93) est adapté pour déterminer l'amplitude dudit signal d'horloge.

14. Dispositif de terrain selon l'une quelconque des revendications 11 à 12, dans lequel le commutateur de protection (935) comprend un FET.

15. Positionneur (83) comprenant un dispositif de terrain selon l'une quelconque des revendications 1 à 14.
